Europäisches Patentamt

European Patent Office

Office européen des brevets

(19)

(11) Veröffentlichungsnummer: **0 220 253**
**B1**

(12) **EUROPÄISCHE PATENTSCHRIFT**

(45) Veröffentlichungstag der Patentschrift: **13.06.90**

(51) Int. Cl.⁵: **A 23 P 1/14**

(21) Anmeldenummer: **86902822.5**

(22) Anmeldetag: **17.04.86**

(86) Internationale Anmeldenummer:
**PCT/EP86/00227**

(87) Internationale Veröffentlichungsnummer:
**WO 86/06256 06.11.86 Gazette 86/24**

(54) **VERFAHREN UND VORRICHTUNG ZUM EXTRUDIEREN VON NAHRUNGSMITTELN.**

(30) Priorität: **30.04.85 DE 3515617**

(43) Veröffentlichungstag der Anmeldung:
**06.05.87 Patentblatt 87/19**

(45) Bekanntmachung des Hinweises auf die
Patenterteilung:
**13.06.90 Patentblatt 90/24**

(84) Benannte Vertragsstaaten:
**AT BE CH DE FR GB IT LI LU NL SE**

(56) Entgegenhaltungen:
**FR-A-2 294 652**
**FR-A-2 387 681**
**US-A-3 480 442**
**US-A-36 845 21**

(73) Patentinhaber: **Heinz Schaaf Nahrungsmittel-Extrusionstechnik**
**Quellenweg 14 + 19a**
**D-6277 Bad Camberg/Oberselters (DE)**

(72) Erfinder: **SCHAAF, Heinz**
**Quellenweg 14 + 19a**
**D-6277 Bad Camberg-Oberselters (DE)**

(74) Vertreter: **Patentanwälte Müller-Boré, Deufel, Schön, Hertel, Lewald, Otto**
**Postfach 26 02 47 Isartorplatz 6**
**D-8000 München 26 (DE)**

EP 0 220 253 B1

**Beschreibung**

Die Erfindung betrifft ein Verfahren zum Extrudieren von Nahrungsmitteln, wobei in einem Extruder aus Kohlyhydraten, Eiweiß, Fetten, Aromastoffen und Wasser eine Mischung hergestellt und diese Mischung durch eine Extruderschnecke zu einem Teig verarbeitet wird, der unter Expansion aus einer Düse austritt, wobei der Austritt des Extrudates aus der Extruderdüse in einen Raum verminderten Druckes erfolgt, sowie eine Vorrichtung zur Durchführung dieses Verfahrens.

Bei der Extrusion von Nahrungsmitteln, die bei einer Temperatur von 100°C und mehr durchgeführt wird, entstehen beim Austritt aus dem Düsenkopf Dämpfe. Diese Dämpfe werden entweder abgesaugt oder abgeblasen, um Kondensatbildung im Expansionsraum zu vermeiden und um den Produktionsraum nicht mit Feuchtigkeit und Gerüchen zu belasten.

Beim Austritt des Extrudates aus dem Düsenkopf tritt eine Expansion ein, wenn das Extrudat, das normalerweise eine verdampfbare Flüssigkeit enthält, von einer Zone hohen Druckes bei einer Temperatur, die höher ist als die Verdampfungstemperatur der betreffenden Flüssigkeit, in eine Zone niedrigen Druckes gelangt. Ein Lebensmittelteig, der Wasser enthält, wird bei einer Temperatur von über 100°C extrudiert und dieser Teig expandiert infolge des Druckabfalls beim Passieren der Extruderdüse durch den entstehenden Wasserdampf.

Die heute üblichen Verfahren zum Extrudieren von Nahrungsmitteln weisen den Nachteil auf, daß infolge der erforderlich hohen Temperatur beispielsweise Fette mit niedrigem Schmelzpunkt nicht geeignet sind. Darüber hinaus gehen durch das Verdampfen der in dem Teig enthaltenen Flüssigkeit ein großer Teil der im Rohstoff enthaltenen natürlichen oder hinzugefügten Geschmacksstoffe verloren, da diese bei dem Austritt aus der Düse ebenfalls verdampfen. Bei der Herstellung von Snacks, Flachbrot und dergleichen tritt ein Verlust der eingesetzten Geschmacksstoffe (beispielsweise Zwiebeln, Kümmel, Sellerie, Pfefferminz, Kräuter aller Art, usw.) in der Größenordnung von 40 bis 80% auf. Verluste an Aromastoffen treten ebenfalls bei Verwendung von konzentrierten Aromakompositionen natürlicher oder naturidentischer Art, wie sie von der Essenzenindustrie seit langem angeboten werden trotz Optimierung hinsichtlich ihrer Verflüchtigung auf. Zur Kompensierung dieser Verluste müssen Aromastoffe in erhöhter Menge hinzugegeben werden, um letztendlich das gewünschte Geschmacksergebnis zu erhalten. Eine derartige Beimischung von Aroma- und Geschmacksstoffen in großen Mengen stößt sehr leicht an verfahrenstechnische Grenzen oder der Hersteller ist gezwungen, die Aromatisierung des extrudierten Nahrungsmittels mit speziell aufbereiteten Aromen durch nachträgliches Coating zu realisieren. Dadurch wird gezwungenermaßen die Produktpalette eingeschränkt oder die Herstellung scheitert an wirtschaftlichen Überlegungen.

Aus der FR—A—22 94 652 ist ein Verfahren bekannt, bei welchem beispielsweise Kaffeebohnen in ein Vakuum extrudiert werden, um ein Granulat herzustellen. Aromastoffe werden dort nach der Extrusion in Form einer Dispension aufgebracht oder das Granulat wird in eine Kohlendioxidatmosphäre eingebracht, die mit Aromastoffen beladen ist. Der Verbrauch von Aromastoffen bei diesem Verfahren ist sehr hoch.

Der Erfindung liegt die Aufgabe zugrunde, ein Verfahren und eine Vorrichtung zu schaffen, mit welchen der Verbrauch an Aroma- und Geschmacksstoffen stark eingeschränkt werden kann.

Diese Aufgabe wird erfindungsgemäß dadurch gelöst, daß die bei der Expansion frei werdenden Dämpfe kondensiert werden, und die dabei ausfallenden flüchtigen Aromastoffe dem Extruder wieder zugeführt oder zur weiteren Verarbeitung verwendet werden, so daß kein Verlust an teuren Aroma- und Geschmacksstoffen auftritt. Ferner erfolgt in der Produktionsstätte keine Geruchsbelästigung, da die verdampften Aromastoffe nicht in die Umgebung freigesetzt werden.

Eine Vorrichtung zur Durchführung des Verfahrens mit einem Düsenkopf und einer vor dem Düsenkopf angeordneten Schneideinrichtung zum Ablängen des Extrudates in einer mit einer Unterdruckeinrichtung verbundenen Vakuumkammer und einer Schleuse für den Austrag der extrudierten und abgeschnittenen Nahrungsmittel ist dadurch gekennzeichnet, daß zur Rückgewinnung der Aromastoffe die Vakuumkammer mit einem Kondensator verbunden ist. Dieser Kondensator ist vorzugsweise zwischen Vakuumkammer und Unterdruckeinrichtung angeordnet. Die Rückführung der kondensierten Aromastoffe zur Wiederverwendung kann über eine Leitung erfolgen, die entweder mit dem Behälter für die Aromastoffe verbunden ist oder die zur Eingabe an dem Extruder geführt ist.

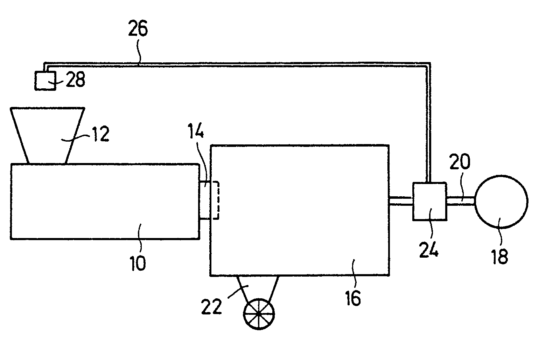

Ein Ausführungsbeispiel der Erfindung wird nachstehend anhand der Zeichnung näher erläutert.

Die Zeichnung zeigt in schematischer Darstellung einen Extruder 10 mit einem Eingabetrichter 12. In dem Extruder 10 ist eine Extruderschnecke angeordnet, über welche eine Vermischung und ein Transport des zu extrudierenden Materials erfolgt. Am Austrittsende des Extruders ist ein Düsenkopf 14 angeordnet.

Vor der Extruderdüse 14 ist eine Vakuumkammer 16 angeordnet. Der Unterdruck in der Vakuumkammer 16 erfolgt über eine Vakuumpumpe 18, die über eine Leitung 20 mit der Vakuumkammer 16 verbunden ist. In der Vakuumkammer 16, die dicht mit dem Düsenkopf 14 abschließt, ist eine für das zu extrudierende Nahrungsmittel geeignete Schneidvorrichtung (nicht dargestellt) angeordnet. Der Austrag des Extrudates aus der Vakuumkammer 16 erfolgt über eine Produktaustragsschleuse 22, die bei der gezeigten Ausführungsform als Zellenradschleuse ausgebildet ist.

Wenn in der Vakuumkammer 16 ein absoluter Druck von 0,1 bar herrscht, reduziert sich die Verdampfungstemperatur des aus dem Düsenkopf mit dem Extrudat austretenden Wassers auf ca. 50°C. Der aus dem Düsenkopf 14 austretende Teig weist dabei beispielsweise eine Temperatur von 90°C auf. Bei diesen Werten tritt an dem Extrudat die gleiche Expansion auf, wie sie beim konventionellen Verfahren bei einer Ausgangstemperatur von 140°C zu erreichen ist. Damit können Stoffe extrudiert und expandiert werden, die entweder aufgrund ihrer Temperaturempfindlichkeit oder ihrer thermoplastischen Eigenschaften bisher nicht verwendbar waren.

Zwischen der Vakuumkammer 16 und der Pumpe 18 ist in der Leitung 20 ein Kondensator 24 angeordnet, in welchem die abgesaugten Dämpfe kondensiert werden. Nach entsprechender Aufbereitung der Dämpfe können ausgefallene Aromaoder Geschmacksstoffe dem Rohstoff wieder zugeführt werden oder diese Aromastoffe können zur Herstellung einer Coating-Lösung verwendet werden. Die Aufbereitung der Dämpfe erfolgt vorzugsweise mit dem Ziel, die enthaltenen Aromastoffe möglichst konzentriert zu erhalten. Vorrichtungen zur Kondensation und Trennung der gewünschten Stoffe, entweder in der Dampfphase oder in der Flüssigphase, sind hinreichend bekannt.

Zur Rückführung in dem Kondensator ausgefallener Aromastoffe ist eine Leitung 26 vorgesehen, welche zu einem Behälter 28 führt, in dem die dem zu extrudierenden Material zuzuführenden Aromastoffe enthalten sind.

## Patentansprüche

1. Verfahren zum Extrudieren von Nahrungsmitteln, wobei in einem Extruder aus Kohlehydraten, Eiweiß, Fetten, Aromastoffen, Wasser und dergleichen eine Mischung hergestellt und diese Mischung durch eine Extruderschnecke zu einem Teig verarbeitet wird, der unter Expansion aus einer Düse austritt, wobei der Austritt des Extrudates aus der Extruderdüse in einen Raum verminderten Drucks erfolgt, dadurch gekennzeichnet, daß die bei der Expansion freiwerdenden Dämpfe kondensiert werden und daß die dabei ausfallenden Aromastoffe dem Extruder wieder zugeführt oder zur weiteren Verarbeitung verwendet werden.

2. Vorrichtung zum Extrudieren von Nahrungsmitteln, mit einem Extruder und mit einer vor dem Düsenkopf des Extruders angeordneten Schneideinrichtung, zur Durchführung des Verfahrens nach Anspruch 1 wobei der Düsenkopf (14) und die Schneideinrichtung in einer mit einer Unterdruckeinrichtung (18) versehenen Vakuumkammer (16) angeordnet sind und an der Vakuumkammer (16) eine Schleuse (22) für den Austrag der extrudierten und abgeschnittenen Nahrungsmittel vorgesehen ist, dadurch gekennzeichnet, daß die Vakuumkammer (16) mit einem Kondensator (24) verbunden ist.

3. Vorrichtung nach Anspruch 2, dadurch gekennzeichnet, daß der Kondensator (24) zwischen Vakuumkammer (16) und Unterdruckeinrichtung (18) angeordnet ist.

4. Vorrichtung nach Anspruch 2 oder 3, dadurch gekennzeichnet, daß der Kondensator (24) über eine Leitung (26) mit einem Behälter für Aromastoffe verbunden ist.

## Revendications

1. Procédé d'extrusion de produits alimentaires dans lequel un mélange composé d'hydrates de carbone, de blanc d'oeuf, de graisses, de substances aromatiques, d'eau et des équivalents est préparé dans une extrudeuse et transformé en une pâte au moyen d'une vis d'extrudeuse, laquelle pâte sort d'une filière sous l'effet d'une expansion, la sortie du produit d'extrusion par la filière d'extrusion s'effectuant dans un compartiment à pression réduite, caractérisé en ce que les vapeurs libérées pendant l'expansion sont condensées et les arômes ainsi dégagés sont réintroduits dans l'extrudeuse ou sont utilisés pour le traitement complémentaire.

2. Dispositif d'extrusion de produits alimentaires, comportant une extrudeuse et un dispositif de coupe disposé devant la tête d'injection de ladite extrudeuse, pour la mise en oeuvre du procédé selon la revendication 1, la tête d'injection (14) et le dispositif de coupe étant disposés dans une chambre à vide (16) pourvue d'un dispositif à vide (18) et un sas (22) destiné à l'évacuation des produits alimentaires extrudés et découpés étant prévu sur la chambre à vide (16), caractérisé en ce que la chambre à vide (16) est reliée à un condenseur (24).

3. Dispositif selon la revendication 2, caractérisé en ce que le condenseur (24) est disposé entre la chambre à vide (16) et le dispositif à vide (18).

4. Dispositif selon la revendication 2 ou 3, caractérisé en ce que le condenseur (24) est relié à un réservoir de substances aromatiques au moyen d'une conduite (26).

## Claims

1. Method for the extrusion of foodstuffs, where a mixture of carbohydrates, protein, fats, aromatics, water and the like is formed in an extruder, and this mixture is processed into a dough by an extruding auger, expanding out of a nozzle, emergence of the extruded material from the extrusion nozzle taking place into a chamber at reduced pressure, characterized in that the vapours released by the expansion are condensed, and that the aromatics thus produced are returned to the extruder, or used in further processing.

2. Equipment for the extrusion of foodstuffs, with an extruder, and a cutter mechanism in front of the nozzle head of the extruder, to carry out the process in accordance with claim 1, and where the nozzle head (14) and the cutter mechanism are mounted in a vacuum chamber (16) with exhauster (18), and where a lock (22) is mounted on the vacuum chamber (16) for the discharge of the extruded and cut foodstuff, characterized in that the vacuum chamber (16) is connected to a condenser (24).

3. Equipment in accordance with claim 2, characterized in that the condenser (24) is mounted between the vacuum chamber (16) and the exhauster (18).

4. Equipment in accordance with claim 2 or 3, characterized in that the condenser (24) is connected by a pipe (26) to a vessel for aromatics.